(19) Europäisches Patentamt
European Patent Office
Office européen des brevets

(11) EP 4 321 430 A1

(12) **EUROPEAN PATENT APPLICATION**

(43) Date of publication:
14.02.2024 Bulletin 2024/07

(21) Application number: 22189442.1

(22) Date of filing: 09.08.2022

(51) International Patent Classification (IPC):
*B64C 21/04* (2023.01)   *B64C 9/16* (2006.01)

(52) Cooperative Patent Classification (CPC):
B64C 21/04; B64C 9/16

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Pie Aeronefs SA**
**1315 La Sarraz (CH)**

(72) Inventors:
• **JONSSON, Magnus Johannes**
**1010 Lausanne (CH)**
• **UMBRICHT, Marc P.**
**1162 St-Prex (CH)**

(74) Representative: **Bardehle Pagenberg**
**Partnerschaft mbB**
**Patentanwälte Rechtsanwälte**
**Prinzregentenplatz 7**
**81675 München (DE)**

(54) **BLOWER FOR HIGH-LIFT AIR VEHICLES**

(57) The present invention relates to wing (4) for an aircraft (1), the wing (4) comprising: a wing element (5) having a wing pressure side (8); a flap (40) arranged at the wing element (5), the flap (40) having a flap suction side (41) and a flap pressure side (42), wherein the flap (40) is adapted to divide a main flow into an upper main flow essentially around the flap suction side (41) and a lower main flow essentially around the flap pressure side (42); and a blower means (50) arranged at the wing pressure side (8) upstream of the flap (40) and adapted to energize the upper main flow by a greater extent than the lower main flow, when the flap (40) is not in a retracted position.

Fig. 10

## Description

## Technical field

The present invention relates to a wing for an aircraft, the wing comprising a flow control device. In particular, the present invention relates to a blower as an active flow control device of a wing to blow a fluid flow to a flap arranged downstream of the blower to improve the flow and in particular to increase a momentum of a boundary layer of the flap.

The present invention further relates to an aircraft comprising such a wing with an active flow control device. Furthermore, the invention is directed to a method for operating an aircraft, particularly for controlling a flow around a flap of a wing of said aircraft.

## Technical background

Aircrafts are abundantly available and are facing an increasing popularity around the globe. They enable convenient and fast transportation of users and/or goods. Thus, they are of paramount importance in driving globalization forward, which explains an increasing demand for aviation. Said demand is expected to continually rise in the future.

Aircrafts may be classified in fixed-wing aircrafts (e.g., most of today's regional, short-range, midrange and/or long-haul airplanes or also many air taxis) and rotorcraft or rotary-wing aircrafts (e.g., helicopters). Fixed-wing aircrafts generate lift by the aircraft's forward speed and the shape of the wings. Rotary-wing aircrafts generate lift by rotating blades around a vertical mast. Fixed-wing aircrafts will be referred to in the following and are particularly attractive, as they can usually fly at higher speeds (also referred to as velocity herein).

Keeping the aircraft above the ground and maneuvering the fixed-wing aircraft depends on the lift coefficient. The lift coefficient is a dimensionless coefficient that relates the lift force generated by a lifting body to the fluid density around the body, the fluid velocity and a reference area. The fluid density and the fluid velocity may also play a role in determining the fluid dynamic pressure, which is sometimes also referred to as velocity pressure or kinetic energy per unit volume of a fluid.

A wing of an aircraft is typically designed such that the speed of the fluid around its upper surface is higher compared to the speed of the fluid around its lower surface (as further detailed below, this may be attributable to the positive camber of the wing's airfoil). Thus, a static pressure along the upper surface may be lower compared to along the lower surface. Thereby, integrating the static pressure around the aircraft's wing surface results in a positive lift force acting in an upwards direction. Hereinafter an upwards direction may also be referred to as the direction to the sky and/or the direction facing away from the earth's ground during ordinary operation of an aircraft. Accordingly, the lift coefficient of the wing is greater than zero.

The lift coefficient can be modified by varying an angle of attack according to a fluid's dynamic pressure (which depends on the speed and the density; the density depends on the aircraft's altitude and the fluids temperature). The angle of attack is the angle between a vector of the speed of a fluid, such as air, and a reference line on a body which is hit by the fluid. In the technical field of aircraft wings, the reference line is usually referred to as the chord line of the wing's airfoil. The chord line (also referred to as chord) is a line, preferably in a straight (imaginary) line, joining the leading edge and the trailing edge of the airfoil. The airfoil of a wing may be understood as a 2D cross section of the wing. Increasing the angle of attack may increase the lift coefficient, as the stagnation point is shifted along the wing's lower surface from the leading edge (slightly) towards the trailing edge. This may also be referred to as a shift of the stagnation point towards the aft region of the wing's airfoil. The stagnation point is a point in a flow field where the local velocity of the fluid is zero. In the context of aircraft wings, the stagnation point may be for instance close to the leading edge and or close to the leading edge portion of the airfoil's chord line and/or camber line. The camber line (also referred to as mean camber line or simply camber) may be understood as the line joining the points midway between the upper and lower surfaces of the airfoil and describes how curved an airfoil is. A cambered or highly cambered airfoil may have a curved or highly curved camber line. The airfoil can have a positive, a negative camber or a zero camber. Typically, the wing's airfoil has a positive camber. This promotes an increased fluid velocity around the upper surface compared to the lower surface, which results in an increased lift force and, hence, an increased lift coefficient. A zero camber (or camber free) airfoil usually shows a zero lift force at an angle of attack of zero.

Airfoils of aircrafts' wings are generally streamlined in an effort to minimize drag forces at the cruise operating point. The cruise operating point (CR or CRUISE) is the aircraft's operating point, which is usually maintained for a prolonged time of the overall aircraft's mission. However, for short range aircraft applications such as regional aircrafts or air taxis, this may not be the case. The aircraft's mission usually starts with the (maximum) take-off (MTO) operating point. Subsequently, the climb (CLIMB) operating point follows, which is followed by the cruise operating point. When the aircraft is about to land, the approach (APP) operating point is adjusted followed by the landing (LANDING) operating point. Thus, the aircraft's mission maybe defined by MTO, CLIMB, CR, APP, LANDING.

The drag or drag force is the force that resists movement of an aircraft through the air. The drag force (reverse direction) needs to be met by the thrust (forward direction) of the aircraft to facilitate steady-state flight conditions. In order to accelerate the aircraft, the drag force is required to be exceeded by the thrust.

Airfoils of aircrafts' wings are also streamlined in an attempt to minimize a stall speed (e.g., to match runway length limitations as detailed below). Generally, a low stall speed is desirable, which means that the aircraft's speed may be reduced without substantially risking encountering a stalled wing condition. The stall speed maybe the aircraft's speed which is reduced to such an extent that flow separation on a wing's surface occurs. Such flow separation may happen for instance on the upper surface of the aircraft's wing, which is exposed to adverse pressure gradient during ordinary operation. An adverse pressure gradient maybe defined such that the partial derivative of the pressure along the chord length is positive. Such an adverse pressure gradient usually prevails downstream of the airfoil's point of greatest thickness, i.e., downstream of the greatest thickness-to-chord ratio. Attributable to the adverse pressure gradient downstream of such a chord position, the static pressure rises along the direction of the chord (still it may be lower compared to the wing's lower surface). Accordingly, the flow may be partially directed in the reverse (i.e., forward) direction in a region close to the wings surface, e.g., a region referred to as the boundary layer. Such an occurrence may contribute to the onset of flow separation.

The flow separation may be understood in such a manner that a boundary layer close to the wing's surface separates or detaches from the surface. Particularly this may be relevant for the wing's upper surface. The boundary layer is characterized by high viscous forces, which slow down the fluid's, e.g., the air's, speed in proximity to the surface compared to the bulk (or far-field) flow. As an example, the fluid's speed directly at the surface is zero, e.g., the relative velocity of the fluid's speed and the surface is zero. The boundary layer is usually of a laminar type in an upstream region of the wing, i.e., in a region in proximity of the airfoil's leading edge. The laminar boundary layer may be characterized by smooth regular streamlines of the fluid. Maintaining the boundary layer in a laminar form is usually aimed at, as it increases flow efficiency and reduces drag force. Downstream along the chord-length of a wing, the laminar boundary layer typically transits to a turbulent boundary layer. Thus, the boundary layer becomes thicker, and mixing occurs, resulting in an increased drag. Although a turbulent boundary layer may be more resistant to or less prone to flow separation as compared to a laminar boundary layer, eventually, the laminar and/or turbulent boundary layer can separate from the wing's surface, resulting in a stalled condition. In such a condition the wing may not provide sufficient lift, i.e., the lift coefficient may drastically reduce, bringing the aircraft in a dangerous situation. Wing designs for low stall speeds may partially counteract these adverse effects.

Thus, wings with the capability of high lift (high lift devices) bear the potential that a runway length for take-off and landing can be reduced if measures for low stall speeds are also provided for. Accordingly, aircrafts equipped with such wings are suitable for short take-off and landing (STOL) applications.

Another parameter in this technical field that is related to the lift, drag and separation of flow maybe the Reynolds number. The Reynolds number may relate the fluid density, the fluid velocity, a characteristic length and the dynamic viscosity of the fluid as a dimensionless quantity. In the technical field of wings, the characteristic length is typically the chord-length of the wing. The Reynolds number is the ratio of inertial forces to viscous forces within a fluid which is subjected to relative internal movement due to different fluid velocities. As friction (e.g., a skin friction) is caused by viscosity, high values of the Reynolds number lead to relatively lower viscous forces, which can lead to a reduced drag. At lower Reynolds numbers the flow around a wing may be laminar (laminar boundary layer). At higher Reynolds numbers the flow is more likely to become turbulent (laminar boundary layer). As explained above, at high Reynolds numbers (likely turbulent flow), the flow may sustain the adverse pressure gradients without separation by a greater extent. However, during low speed operating points such as MTO and LANDING, the Reynolds number maybe low (reduced speed). Thus, the laminar boundary layer could likely separate from the wing.

Known designs to increase the lift comprise for instance highly cambered airfoils and/or the application of multiple airfoils. The latter designs combine more than one airfoil along the flow direction. For instance, one or two flaps may be arranged downstream of the main wing of the fixed-wing aircraft. As an example, a flap may be installed downstream the trailing edge of the main wing. The flaps may be movable to adjust the lift coefficient of the overall wing. For instance, the flaps can be turned (e.g., turned downwards) depending on different operating points of the aircraft to adjust the flow field around the main wing and the flaps. Thus, the maximum achievable lift coefficient may be further increased. Different flap designs are known, such as plain flaps, split flaps, slotted flaps, fowler flaps, double-slotted fowler flaps or comparable flaps. Accordingly, high lift wings facilitate a reduced wing area for the same lift which leads to less parasitic drag forces. Thus, improved performance at the cruise operating point may be achieved.

However, such known high lift wings pose several challenges. For instance, they entail increased structural and mechanical complexity. As an example, measures to perform complex movements of the (several) downstream flaps must be enabled in a reliable manner. Moreover, the mechanical loads, such as the bending loads increase, which require more durable and more sophisticated materials, which is expensive. Large single slotted flaps are less costly; however, they are more prone to flow separation as compared to more sophisticated flap designs. Furthermore, the wing area is usually over-sized for the cruise operating point (in which usually high lift forces and high lift coefficients are not required; it is to be noted that lift force remains substantially constant with air speed, allowing a lift coefficient to vary). In other words, the surface area of such wings is larger than required for the cruise conditions, which leads to unnecessary drag forces. Hence, the aircraft's propulsive efficiency is reduced, which adversely affects fuel efficiency and the overall costs.

Known designs of high lift wings may be separated into active and passive high lift devices. Passive high lift devices are less complex and less expensive; however, they do not serve to control and/or prevent the flow separation to a sufficient degree or to an acceptable satisfaction. In addition, the total air pressure is limited by the freestream velocity, i.e., passive high lift devices do not provide for means to increase the total pressure or the fluid's energy.

Active high lift devices on the other hand allow to impart energy into the fluid and can provide for an increased velocity and/or an increased static pressure. Thus, the total pressure could be increased. This could improve controlling the boundary layer and/or flow separation. Active high lift devices may also be applied in conjunction with passive high lift devices.

Examples of known active high lift devices may be illustrated by way of example in the following.

Document (1) (NASA Technical Note D-6394 published July 1971, entitled "Potential Flow Solution for a STOL wing Propulsion System", authored by James A. Albers and Merle C. Potter) may be referred to in support of understanding the background art. Document (1) relates to a two-dimensional wing-fan system for STOL aircrafts, which consists of an airfoil with a flap and fans located under the wing. In particular, document (1) describes a numerical method to predict, based on potential flow theory, the flow fields, pressure distributions, and lift coefficients for an externally blown flap with high lift configuration. Document (1) claims to predict the output data (e.g., lift coefficients) with a good agreement when compared to experimental data for several angles of attack of the flaps. In a use case, document (1) applies multiple turbofans below the wing as shown in Figs. i(b) and 2(a) of document (1). These serve to generate the main thrust of the aircraft.

The configuration as suggested in document (1) has several disadvantages. In particular, the configuration fails to account for a proper distribution in energizing the flow around the flap. This adversely affects the lift coefficient, e.g., at take-off and/or landing. Furthermore, the fans are required to be maintained (e.g., fixed) in a position during all operating points, e.g., also during the cruise operating point. If the fans were not maintained in such a position, there would be no thrust generation or less thrust generation than required for overcoming the drag forces for a steady flight condition. Accordingly, during cruise operating conditions, the flow around the lower surface of the main wing is adversely affected by the presence of such fans, which reduces the propulsive efficiency of the aircraft. Furthermore, the fans are mounted in the upstream half between the trailing and the leading edge of a main wing body, e.g., which could adversely affect the net pitching moment. Another disadvantage is that the vertical expansion of the fans is large. Thus, the fans of document (1) cannot influence or control the boundary layer in direct proximity of the wings' and/or flaps' surfaces due to a spatial hindrance or a spatial distance to the surfaces. Accordingly, imparting momentum into the boundary layer becomes difficult.

Document (2) (From the Aeronautical Journal of January 2016, entitled "Active flow control for high lift with steady blowing", authored by R. Radespiel, M. Burnazzi, M. Casper and P. Scholz) discusses active flow control by steady blowing in form of a numerical analysis. A first approach of blowing applies tangential blowing of thin wall jets to overcome an adverse pressure gradient from locally very large flow turning rates. This approach exploits the potentials of the Coanda effect. The second approach employs oblique blowing of air jets designed to generate longitudinal vortices in the boundary layer. For this second approach, Vortex Generating Jets (VGJ) are employed.

These devices require a compressor within the wing to provide for compressed air to be directed to the wing. This is a complex approach and has a detrimental effect on the wing's mechanical integrity. Also jet flaps are known, which also require compressed air.

Document (3) (From the 15th AIAA conference 2015, entitled "Comparison of CFD and Experimental Results of the LEAPTech Distributed Electric Propulsion Blown Wing", authored by Alex M. Stoll) discusses the LEAPTech demonstrator, which is a wing design for a four-place general aviation aircraft with high wing loading. Ride quality is said to be improved. 18 small propellers are arranged on the leading edge of the wing and operated by means of distributed electric propulsion.

The proposed upstream propulsion redistributes the flow on the trailing elements. However, such proposed large diameter rotors entail a significant drag penalty in the cruise operating point. Furthermore, such propellers are not designed to control the flow of a flap to increase a lift coefficient. In addition, the propellers are mandatory for thrust and cannot be stored away at different mission's operating points.

In view of the foregoing, conventional designs of high lift devices fail to account for the challenges posed or at least fail to account for these to a sufficient satisfaction. This calls for efforts in improving such designs. In particular, these efforts need to be further followed to cope with the increasing demand for aviation.

Against this background, an object of the present invention is to address one or more or all of the above-mentioned challenges and improved the deficiencies of the conventional designs. Particularly, it is an object of the present invention to provide an improved wing with flow control means to produce a high lift while flow separation is avoided. In particular, high lift should be provided at operating points where such high lift is demanded to make the wing suitable for STOL aircrafts applications. In addition, it is an object to provide measures to counteract drag penalties introduced by the flow control means at operating conditions where high lift is not of utmost importance. It is a further object to provide for such flow control means that may be easily moved. It is generally an object to improve the propulsive and thermal efficiency of an aircraft with such improved wing and to provide such an aircraft.

These and other objects, which become apparent from the following description, are solved by the subject-matter of the independent claims. Preferred embodiments are subject of the dependent claims, and the skilled person finds hints for other suitable embodiments of the present invention throughout the disclosure of the present application.

**Summary of the invention**

A 1st embodiment of the invention is directed to a wing for an aircraft, the wing comprising: a wing element having a wing pressure side; a flap arranged at the wing element, the flap having a flap suction side and a flap pressure side, wherein the flap is adapted to divide a main flow into an upper main flow essentially around the flap suction side and a lower main flow essentially around the flap pressure side; and a blower means arranged at the wing pressure side upstream of the flap and adapted to energize the upper main flow by a greater extent than the lower main flow, when the flap is not in a retracted position.

The blower means maybe an active blower means. Alternatively, or additionally, the blower means may also be referred to as an active flow control device. The blower means may also be aspiration means. Energizing a flow may be understood such that energy is imparted into a flow, e.g., a total pressure of a fluid element may thus be increased. The fluid element may be air.

The advantage attributable to energizing the upper main flow by a greater extent than the lower main flow is that the flow around the overall surface of the flap is substantially prevented from separation. Thus, the flow remains attached around the suction side (typically the upper side or upper surface of the flap during ordinary operation) and the pressure side (typically the lower side or upper surface of the flap during ordinary operation). In particular, the inventors found out that the flow around the suction side should be energized by a greater extent than the flow around the pressure side, since the flow around the suction side could be prone to separation. With such an arrangement, the forward speed of an aircraft having such a wing can be reduced without encountering a separation of the flow or risking stalling the flap. Accordingly, high lift at low speeds is achieved.

As an example, the blower means may be adapted to generate a lift coefficient of the wing of at least 2, preferably at least 3, more preferably at least 4, even more preferably at least 5, further more preferably at least 6, most preferably at least 7. In this respect, the lift coefficient may be understood as the lift coefficient provided by the wing element, the flap and the blower means.

Another advantage of the above arrangement is that the blower means is arranged at the wing pressure side. This has a particular positive effect as the blower means is more effective at imparting energy into a flow in a (high) pressure region, such as a pressure region below the wing, compared to imparting energy into a flow in a suction region, such as a low-pressure region above the wing. This may be understood in such a way that imparting energy in a region with a lower fluid velocity (wing pressure side) has a higher efficiency compared to imparting energy in a region with a higher fluid velocity (wing suction side).

It was found out in a manner never seen before, that the combination of the two above mentioned effects ensures that a maximum amount of flow over the flap remains attached and the flow is efficiently energized. This applies in particular when the flap is not in a retracted position, e.g., when the flap is deflected to provide for a downwash of air downstream the flap (and a corresponding upwash of air in proximity of the leading edge of the wing element). Such a deflection of the flap usually occurs during TAKE-OFF, APPROACH and/or LANDING operating points. Thus, the above arrangement provides for an increased lift coefficient at a low aircraft's speed, which is highly appreciated at such operating points where high lift is demanded. The conventional implementations failed to provide for such measures or to acknowledge such an effect.

The above arrangement allows for achieving such a high lift without the need of complex flap designs or complex flap implementations. For instance, conventional implementations require double slotted flaps and/or multiple flaps downstream a main wing element to control a flow around the individually flaps and to provide an increased lift at takeoff and landing configurations. The arrangement according to the present invention allows to employ a simplified structure of the flap geometry. As an example, the flap may be a large single slotted flap, which is less costly in terms of manufacturing and maintenance and less complex to move and/or deflect. In addition, due to a large reference length, e.g., a large chord-length, attributable to such a large single slotted flap, the Reynolds number could be increased. As explained above, a higher Reynolds number may lead to a turbulent boundary layer, which is more resistant to flow separation. Accordingly, this further promotes prevention of flow separation, which enhances the lift coefficient.

The prescribed aspect of the invention culminates in increased lift coefficients, which is advantageous for short take-off and landing (STOL) aircrafts. Accordingly, an aircraft with such a wing is eligible to be operated on shorter runways than usual. In addition, an aircraft's operating point such as a climb may overcome faster due to an increased lift coefficient, such that an operating could spent more time during a more energy efficient cruise operating point. Accordingly, an increased overall fuel efficiency of an aircraft with such an inventive wing can be achieved.

Another advantage of the blower means being arranged at the pressure side is that the net pitching moment is smaller compared to configurations where blowers are applied on the top, or the aft, e.g., downstream of the wing.

The above-mentioned beneficial effects may also be understood with the aid of a 2D cross sections of the wing, the wing element and/or the flap. Such 2D cross sections maybe termed airfoils. The skilled person understands that such positive effects can be well explained and are supported by an analysis of the flow around such airfoils. It may generally be reasonable in the art to approximate flow phenomena occurring at a wing, wing element and/or a flap by transferring it in a 2D section.

According to a 2nd embodiment, in the preceding embodiment, the wing further comprises a recess, and wherein the blower means is movably arranged on the wing pressure side via a hinge to be moved into the recess.

As an example, the recess could be understood as a cove space, or a space in which something could be placed or stored. Movably arranged means that the blower means could be at least partially translated, rotated, tilted or that it could be subject to any other possible way of motion. Preferably, the blower means is rotated with the hinge or at least part of the hinge being the point of rotation.

As an example, the blower means could be stored away entirely. This may be understood in such a way, that a volume encompassed by the blower means may be completely stored in the recess. In one example, the blower means could be smaller compared to the wing element and/or compared to the flap, to be conveniently moved into the recess.

The above embodiment has the advantage that, when the blower means is moved into the recess, the blower means does not substantially influence a fluid flow around the wing element and/or the flap. Thereby, the fluid flow may not be disturbed. Potentially, this could be of significant value at operating points in which a high lift coefficient is of minor importance, such as a cruise operating point of an aircraft. Thus, no geometrical hindrance and/or obstacles are/is present that could adversely affect the flow or that could potentially trigger a separation of flow. Thus, the wing pressure side may be subject to a large region with laminar flow, which entails a low drag force. Furthermore, since substantially no high or increased lift is required during such operating points, flow separation may not be critical in such operating points and aiming for reduced drag force becomes important. Thus, with this arrangement, the aerodynamic performance of the wing is significantly increased during cruise operating point.

The blower means may not be mandatory to provide for a thrust. Thus, the arrangement enables the blower means to be moved into the recess during some operating points, e.g., the cruise operating point. Operating the aircraft may still be viable by different means for thrust generation.

According to a 3rd embodiment, in the preceding embodiment, the recess is arranged at the wing element substantially at a region with which the flap is engaged; optionally the blower means is configured to be moved into the recess substantially not in a downstream direction.

The recess may be located at the wing element at a region with which the flap is supported. As an example, the flap may be somehow connected to a region of the wing element. Substantially in proximity of this region, the recess is arranged.

This has the advantage that a compact design of the wing element can be provided. As an example, a recess may be provided for in some embodiments of the flap for an engagement of the flap with the wing element. Thus, the provided recess may be utilized for allowing the blower to be moved into the recess.

Moving the blower means substantially not in a downstream direction is to be understood as moving the blower means substantially not in a direction similar to a flow during ordinary operation of the wing.

It is appreciated that the blower means may be moved in a direction substantially perpendicular to the downstream direction. The downstream direction may be, in one example, parallel to the direction of from a leading edge to a trailing edge.

Preferably, the blower means is rotated and/or pivoted about the downstream direction (e.g. parallel to a chord).

Such a movement has the advantage, that the blower means may not substantially interfere with the flap in a retracted position in the recess. Thereby, the blower means does not come into contact with the flap being in a retracted position.

A further advantage attributable to the movement of the blower means as described herein is that it provides for a more simplified mechanical movement (e.g. mechanical simplicity is ensured, which reduces service costs).

It may also be possible that the blower means is moved in a vertical direction such that the blower means may be substantially translated in the vertical direction.

It is appreciated that also a combination of rotating and/or a pivoting about the downstream direction and/or a translation along the vertical direction is possible.

As understood by the skilled person, if the blower means were to be moved out of the recess, this could be in a reverse direction, e.g., reverse as described to the aforedescribed movement.

This has the advantageous effect that movement is facilitated, since it may not interfere with the flap and/or the flaps movement.

According to a 4th embodiment, in any one of the 2nd or 3rd embodiments, the recess is arranged in proximity of a downstream region of the wing element.

With this embodiment, the recess may be located closer to a trailing edge of the wing element compared to a leading edge of the wing element. In an example, the recess may be arranged in a region of the wing element starting at least 50%, preferably at least 60%, more preferably at least 70%, even more preferably at least 75%, most preferably at least 80% of a chord-length of the wing element. Furthermore, the recess may be arranged in a region of the wing element ending at about 100%, preferably ending at at most 98% of a chord-length of the wing element. Thus, most preferably, the recess may expand over a region starting at 80% and ending at about 100% of a chord-length of the wing element.

This has the advantage that the blower means may be suitably arranged, e.g., in a spatial perspective, to facilitate and enhance energizing of the flow around the flap. Another advantage is that the blower means may be stored in a region of the wing element which is subjected to lower mechanical loads.

According to a 5th embodiment, in any one of the preceding embodiments, the blower means is adapted to be in an expanded mode, when the flap is not in a retracted position, such as an APPROACH, LANDING, TAKE-OFF and/or CLIMB operating state; optionally the blower means is adapted to be not in an expanded mode, when the flap is in a retracted position, such as a CRUISE (CR) operating state.

An expanded mode may encompass an open mode, active mode or operative much. In such a mode, the blower means is configured to energize a flow. Beneficially, such an expanded mode may be synchronized with the flap being not in a retracted position. Such a position is required at operating states of the wing, the wing element and/or the flap that demand a high lift.

This has the advantage that the blower means can be set into operation in a targeted manner so as to operate the blower in a flexible manner. In particular, it has the advantage to energize the upper main flow greater than the lower main flow of the flap, when such an energizing is of considerable importance to keep the flow attached over the surface of the flap to ensure a high lift coefficient.

In another example, the blower means may be not in an expanded mode at an operating point in which no high lift is required. A not expanded mode may also be referred to as a closed mode, an inactive mode or an inoperative mode. For instance, the not expanded mode may represent a mode in which the blower means is moved into the recess.

The advantage of the not expanded mode is that the wing is optimized for reduced friction, high Reynolds numbers, and low drag forces. This enhances the aerodynamic performance and culminates in an increased propulsive and thermal efficiency. A wing providing for such a combined effect of high lift with mostly attached flow during some operating points (e.g., APPROACH, LANDING, TAKE-OFF and/or CLIMB), whilst providing for reduced drag in other operating points (e.g., CRUISE) is unparalleled and seeks its equal.

However, in some examples, it may be desirable and also possible that the blower means is in an expanded mode, when no high lift is demanded. For instance, the blower means could be in an expanded mode and the flap is in a retracted position, if one aims at increasing a thrust of the aircraft. In such an example, the flap would not deflect the flow, thereby the blower means could contribute to a thrust of the aircraft.

According to a 6th embodiment, in any one of the preceding embodiments, the blower means is movable relative to the wing element to change a direction of the flow leaving the blower means.

With this embodiment, the blower means can easily adapt a direction of its outlet flow to be able to respond to a demand depending on a current air flow and/or a current operating point.

For example, such a demand could be stipulated by a deflection angle of the flap. For instance, if the flap is deflected by a greater angle, it may be advantageous to adjust the direction of the outlet flow of the blower means to ensure that the upper main flow is energized by a greater extent than the lower main flow.

In another example, such a demand could be influence by an angle of attack of the wing element. For instance, if the climb angle during the CLIMB operating point and/or the decent angle during the APPROACH operating point increases or decreases, a relative movement of the blower means to the wing element maybe advantageous.

The above embodiment also has the advantage that the blower means is arranged such that a flow leaving the blower means can be directed directly to a surface of the wing element and/or the flap.

According to a $_7$th embodiment, in any one of the preceding embodiments, the wing element comprises a leading edge and a trailing edge, wherein the blower means is arranged closer to the trailing edge compared to the leading edge of the wing element.

Preferably and/or optionally the blower means is arranged in a region of the wing element of at least 50%, preferably at least 60%, more preferably at least 70%, even more preferably at least 75%, most preferably at least 80% of a chord-length of the wing element; optionally the blower means is arranged in a region of the wing element of at most 98%, preferably at most 95%, more preferably at most 90%, even more preferably at most 85%, most preferably at most 80% of a chord-length of the wing element.

With this embodiment, the blower means is located closer to an aft region of the wing element. This has the advantage, that most of the pressure surface, e.g., the lower surface of the wing is not impaired by spatial barriers and/or obstacles. Thus, the flow of the main wing element is not adversely affected compared to a blower means, which would be located closer to the leading edge of the wing element. In particular, the lower surface of the wing element can be manufactured smoothly to facilitate an improved aerodynamic design. As an example, the flow could be said to be mostly laminar, which reduces a drag.

Another advantage of this embodiment is that a distance of the location at which the flow is energized and the flap, which should receive the energized flow is lowered. Thus, imparting of energy into the flow can be even more effective, which further enhances flow attachment and increased lift coefficient.

According to an 8th embodiment, in any one of the preceding embodiments, the blower means is arranged at least 5%, preferably at least 10%, more preferably at least 15%, most preferably at least 20% of a chord-length of the wing element upstream of the flap; optionally the blower means is arranged at most 40%, preferably at most 35%, more preferably at most 30%, most preferably at most 25% of a chord-length of the wing element upstream of the flap.

Owing to research and investigations conducted by the inventors, it was found that an optimal balance of the distance between the blower means, and the flap should be established. Preferably such a distance applies to operating states in which the flap is not in a retracted position and the blower means is in an expanded mode (e.g., MTO, CLIMB, APPROACH, LANDING).

The distance should not be too small to prevent any mechanical interferences of the blower means and the flap. The distance should not be too large to enable sufficient energizing of the flow around the flap. As an example, if the chord-length of the wing element is about 50 cm or about 100 cm (e.g. 83 cm), the distance could be about at least 10 cm or about at least 20 cm (at least 20%); the distance could also be about at most 12.5 cm or about at most 25 cm (at most 25%).

According to a 9th embodiment, in any one of the 2nd to 4th embodiments, the blower means comprises a support to support the blower means at the wing element and one or more blades. Optionally the blades are configured to rotate at least partially through the recess; optionally a length of the support is at most 80%, preferably at most 70%, more preferably at most 60%, even more preferably at most 50%, further more preferably at most 40%, further more preferably at most 30%, further more preferably at most 20%, most preferably at most 10% of a chord-length of the wing element. Optionally a length of the support is at least 1%, preferably at least 2%, more preferably at least 3%, even more preferably at least 4%, most preferably at least 5% of a chord-length of the wing element.

The support could be a mechanical element. The support may rigidly support the blower means. Still, the blower means maybe movable, preferably about a hinge. The support may be a pylon. The support should be durable and robust enough, e.g., it should have a mechanical strength sufficient to sustain typical loads occurring during operating of the wing and/or the aircraft. The blower means may also comprise one or more blades. The blades should be designed in such a manner to impart energy into a flow entering the blower means during ordinary rotation of the blades.

The blades can rotate at least partially through the recess. This may be understood such that the blades can rotate closely to a surface of the wing element, e.g., there may not be too much space in between. The blades may not touch the surface of the wing element in an expanded mode of the blower means. In addition, the length of the support should not be too large with respect to a chord-length of the wing element.

This has the advantage that a compact, e.g., space saving design is provided. In particular a smaller coverage of the blower means is ensured. The coverage may also be understood as an extension, dimension or something that characterizes its size. As an example, during ordinary operation of the wing this could be understood as a vertical dimension. Thus, the blower means can act (e.g. influence a flow) closely to the surfaces of the wing element and potentially also closely to the flap as appreciated.

Such a positive effect cannot not be achieved by employing relatively large propulsion units that are spaced spanwise with the inlets under the wing.

It is appreciated that the support may have a similar dimension as a radius of a fan of the blower means (e.g. the blower means could be a fan, supported by the support as described herein). The radius of the fan maybe the length of the blades. Such an arrangement provides for a blower means that facilitates influencing a flow closely to the surfaces of the wing element. In a preferred example, the length of the support is 5% of a chord-length of the wing element.

According to a 10th embodiment, in any one of the preceding embodiments, the blower means is adapted to energize the upper main flow and/or the lower main flow such that the upper main flow and/or the lower main flow is attached over at least 60%, preferably at least 70%, more preferably at least 80%, even more preferably at least 90%, most preferably at least 100% of a surface and/or a chord-length of the flap, optionally at an angle of attack of the wing of at least 0°, preferably at least 5°, more preferably at least 10°, even more preferably at least 15°, further more preferably at least 20°, even further more preferably at least 25°, most preferably at least 30°; optionally at a lift coefficient of the wing of at least 2, preferably at least 3, more preferably at least 4, even more preferably at least 5, further more preferably at least 6, most preferably at least 7.

The upper and the lower main flow are energized to a sufficient degree to ensure a flow, which is most preferably attached over the overall surface of the flap. As understood by the skilled person, the flow may leave the flap in proximity of the leading edge. However, it may still be termed to be attached over substantially the overall surface of the flap. Preferably, the flow may comply with the Kutta condition at the trailing edge of the flap. Such a Kutta condition may be derivable from a 2D potential flow theory. Thus, the flow leaves the trailing edge smoothly. Thereby, a thinner wake may be generated, attributable to a thinner boundary layer, e.g. on the upper surface. Such an effect may provide a thinner effective trailing edge thickness, which may culminate in an improved guidance, reduced losses and/or higher flow circulation, e.g. lift coefficient. This may not be achieved without the above embodiment.

By way of the advantageous energization of the flow, such a flow attachment may also be achieved under flow conditions of high angles of attack, demanding a large deflection of the flow. Such a flow attachment may also be reached under flow conditions of high lift coefficients. If the flow were not attached in such a manner, such high lift coefficients could not be achieved. Such a flow attachment may also be reached under flow conditions of high deflection angles of the flap.

According to an 11th embodiment, in any one of the preceding embodiments, the blower means is adapted such that at least 50%, preferably at least 60%, more preferably at least 70%, most preferably at least 80% of a flow leaving the blower is directed around the flap suction side; optionally the blower means is adapted such that at most 100%, preferably at most 96%, more preferably at most 94%, most preferably at most 90% of a flow leaving the blower is directed around the flap suction side.

The suction side of the flap is usually the upper side of the flap during ordinary operation of the wing. The flow leaving the blower may be understood as the flow that enters the blower and that is energized by way of the blower. For instance, the flow volume may be used as a measure to quantify the percentage amounts outlined above. It may also be viable to use the mass flow as a measure to quantify the percentage amounts outlined above. The flow volume may be understood as the volume of the flow. Thus, in one example, the flow volume may be understood as the volume flow (e.g. a volume flow through an element, such as a tube).

As an example, the streamlines of the flow leaving the blower means may be at least partially narrowed compared to the streamlines of the flow entering the blower means. As understood by the skilled person, the sum of the flow leaving the blower means and being directed around the flap suction side and of the flow leaving the blower means and being directed around the flap pressure side may sum up to 100%. Thus, this sum may equal the flow entering and leaving the blower means.

The inventors found that a balance of the amount of flow leaving the blower and being directed around the flap suction side compared to the flap pressure side should be struck. This facilitates that the flow around the suction side (subject to adverse pressure gradient) is energized to a sufficient degree, but also that the flow around the pressure side is at least partially energized. Accordingly, this allows for increased lift coefficients and to sustain high angle of attacks without flow separation.

According to a 12th embodiment, in any one of the preceding embodiments, the blower means is adapted such that a thrust generated by the blower means is at most 50%, preferably at most 30%, more preferably at most 10%, most preferably at most 0% compared to a lift generated by the blower means.

With this embodiment, the thrust generated by the blower means is small compared to the lift. This may be achieved by a high vertical deflection of the flow leaving the blower, e.g., following a deflection of the flap without separation. In this case, the lift generated by the blower means may be referred to as the lift that is solely caused by the blower means. As an example, a lift of about 100 N (Newton) generated by the blower means could mean that at most 30 N (30%), or 10 N (10%) or 0 N (0%) of thrust is generated.

The advantage of this embodiment is that a low additional thrust may be achieved which is desirable at APPROACH or LANDING operating points, where the thrust is usually reduced. Conventional devices for flow control typically lead to increased thrust. Accordingly, the above embodiment of this invention is extremely useful for STOL aircrafts.

According to a 13th embodiment, in any one of the preceding embodiments, the blower means is adapted to energize the upper main flow and/or the lower main flow to increase a momentum of a boundary layer suction side around the flap suction side and/or of a boundary layer pressure side around the flap pressure side;

optionally wherein increasing the momentum of the boundary layer suction side and/or of the boundary layer pressure side means that a total pressure of a fluid is increased by at least 1%, preferably at least 2%, more preferably at least 5%, most preferably at least 10%;

optionally wherein increasing the momentum of the boundary layer suction side and/or of the boundary layer pressure side means that a velocity of a fluid is increased by a factor of at least 1.5, preferably at least 2.0, more preferably at least 3.0, most preferably at least 5.0.

Energizing the upper main flow and/or the lower main flow could mean that a momentum of the respective boundary layers is increased. The term "boundary layer suction side" may be understood as the boundary layer that forms, develop and/or is developed around the flap suction side. The term "boundary layer pressure side" may be understood as the boundary layer that forms, develop and/or is developed around the flap pressure side. An increased momentum ensures that the boundary layer is less prone to separation. Accordingly, the flow is more unlikely to separate. This leads to the flap maintaining an attached flow state and not encountering a stalled state. This promotes a high lift.

As an example, energizing may be expressed in terms of an increase of the total pressure of a flow, e.g., the sum of the static pressure and the dynamic pressure (wherein the dynamic pressure comprises the velocity and density). Increasing the total pressure of the suction side by a greater extent as compared to the pressure side is beneficial for achieving a high lift. This particularly applies to the suction side of the flap.

As an example, if an absolute freestream static pressure is about 101300 Pa (pascal), an increase of 5% of a total pressure means an increase of approximately 5065 Pa or 5000 Pa. This may depend on a thrust coefficient, for instance on a thrust coefficient $C_T$ as defined herein. For instance, a total pressure may be increased by 5% at a thrust coefficient of about 1.0. The above example relating to a pressure increase may depend on the speed of the aircraft (e.g. the Mach number), as understood by the skilled person.

Optionally, increasing the momentum as set forth in the above embodiment may be understood as an increase of a velocity of a fluid. The increase of velocity may be understood by comparing an increased velocity to a freestream velocity. The increased velocity may refer to a slipstream velocity (e.g. a jet velocity). Thereby, the increased velocity may be the velocity exiting the blower means. The freestream velocity may be understood as the velocity of a fluid (far) upstream of an aerodynamic body, e.g. before the body interacts with the fluid. As an example, for a thrust coefficient of about 1.0, the increased velocity may be 3 times higher compared to the freestream velocity (this may be the case if the blower means is about 10% of a chord length of the wing element). Thus, the velocity of a fluid is increased by a factor of about 3.0. Thereby, the fluid is accelerated by way of the blower. The ratio of the increased velocity to the freestream velocity may also be termed blowing ratio and/or momentum ratio.

It may further be possible that, in any one of the preceding embodiments, the wing comprises a plurality of flaps arranged in a downstream direction.

It could also be understood that, in any one of the preceding embodiments, the wing comprises a plurality of blower means arranged along a spanwise direction of the wing element.

It may also be viable that, in any one of the preceding embodiments, the blower means is operated by electrical energy and/or chemical energy, such as kerosene, preferably by electrical energy.

According to another embodiment, in any one of the preceding embodiments, the blower means is one or more of a propulsion unit, a fan, a propeller, a ducted propeller.

According to another embodiment, in any one of the preceding embodiments, the flap is adapted to be not in the retracted position, when in an APPROACH, LANDING, TAKE-OFF and/or CLIMB operating state, preferably wherein the flap is in the retracted position, when in a CRUISE (CR) operating state.

According to another embodiment, in any one of the preceding embodiments, the flap is a plain flap, split flap, slotted flap, fowler flap, double-slotted fowler flap.

In particular, slotted flaps, fowler flaps, double-slotted fowler flaps or comparable flaps may be considered as suitable flaps for guiding a flow and/or for increasing a lift coefficient.

A 14th embodiment of the invention is directed to an aircraft comprising at least one wing according to any one of the preceding embodiments.

Similar features and advantages as set forth above with respect to the wing also apply to the wing comprised by the aircraft.

The aircraft may further comprise a propulsion unit to generate thrust for the aircraft and/or to provide energy to the blower means.

A 15th embodiment of the invention is directed to method for operating an aircraft having a wing, the wing comprising a wing element, a flap and a blower means, the method comprising: generating, by moving the aircraft, a main flow around the wing; moving the flap in a not retracted position, preferably moving the flap to an angle of at least 10°, preferably at least 20°, more preferably at least 30°, most preferably at least 40° with respect to a chord-line of the wing element; dividing, by moving the aircraft, the main flow in an upper main flow essentially around a flap suction side and a lower main flow essentially around a flap pressure side; energizing, using the blower means, the upper main flow by a greater extent than the lower main flow, preferably such that the upper main flow and/or the lower main flow is attached over at least 60%, preferably at least 70%, more preferably at least 80%, even more preferably at least 90%, most preferably at least 100% of a surface and/or a chord-length of the flap.

Similar features and advantages as set forth above with respect to the wing also apply to the method for operating an aircraft having a wing. Thus, the mentioned features, advantages and effects are mutually applicable to the method.

**Brief description of the figures**

In the following, preferred embodiments are described, by way of example only. Reference is made to the following accompanying figures:

Fig. 1    illustrates an exemplary fixed-wing air vehicle according to a general embodiment to demonstrate general principles of fixed-wing air vehicles;

Fig. 2    illustrates an exemplary aircraft's mission in a schematic diagram with the x-axis being a distance travelled by the aircraft and the y-axis being an altitude;

Fig. 3    illustrates an exemplary wing in a 2D cross section according to a general embodiment to

Fig. 4      illustrates an exemplary wing in a 2D cross section at an angle of attack according to a general embodiment to demonstrate general principles of wings in a 2D cross section;

Fig. 5a      illustrates an exemplary conventional wing with a wing element and a flap as used in the prior art in a 2D cross section at an angle of attack;

Fig. 5b      illustrates streamlines of a flow around an exemplary conventional wing according to the preceding figure;

Fig. 6a      illustrates a wing with a wing element, a flap and a blower means according to an embodiment of the invention in a 2D cross section at an angle of attack;

Fig. 6b      illustrates streamlines of a flow around a wing according to the embodiment of the preceding figure;

Fig. 7      illustrates a wing with a wing element, a flap and a blower means according to an embodiment of the invention in a 2D cross section at an angle of attack of about o°;

Fig. 7a      illustrates a further embodiment of the blower means in an expanded and in a not expanded mode;

Fig. 7b      illustrates yet a further embodiment of the blower means in an expanded and in a not expanded mode;

Fig. 8      illustrates a blower means according to an embodiment of the invention in a 2D cross section;

Fig. 9      illustrates streamlines of a blower means and dimensions of a wing according to an embodiment of the invention in a 2D cross section;

Fig. 10      illustrates an aircraft according to an embodiment of the invention, the aircraft comprising a wing according to any of the preceding embodiments of the invention;

Fig. 11      illustrates a diagram of the lift coefficient according to an embodiment of the invention.

**Detailed description of the figures**

Definition of parameters

In the following, some exemplary parameters are described, which may be important to further the understanding the invention.

The lift coefficient ($C_L$) is a dimensionless coefficient that relates the lift force (L) generated by a lifting body to the fluid density (p) around the body, the fluid velocity (v) and a reference area ($A$), as exemplarily indicated in equation (1) below.

$$C_L = \frac{L}{\frac{1}{2}\cdot\rho\cdot v^2 \cdot A} \qquad (1)$$

In one example, equation (1) is applicable for a finite wing lift. A similar equation may be valid for infinite wing lift for a 2D analysis (in which the lift force may be a lift force per unit length). For an infinite wing force the reference area may become a length of chord. As understood, similar results may be retrieved for a finite wing lift and an infinite wing lift (under reasonable assumptions). The fluid density (p) and the fluid velocity (v) may also be summarized as the fluid dynamic pressure (q), as demonstrated by way of example in equation (2) below.

$$q = \frac{1}{2} \cdot \rho \cdot v^2 \qquad (2)$$

The lift coefficient can be modified by varying an angle of attack according to a fluid's dynamic pressure, which depends on the speed and the density as indicated in equation (2) above.

The Reynolds number (Re) may be defined by way of the fluid density (p), the fluid velocity (v), a characteristic length (L) and the dynamic viscosity of the fluid ($\mu$), as indicated in equation (3) below.

$$Re = \frac{\rho\cdot v\cdot L}{\mu} \qquad (3)$$

The characteristic length is typically the chord-length of a wing or a flap.

Passive high lift devices do not provide for increasing the total pressure or the fluid's energy. This may be demonstrated by a simplified form of the Bernoulli's principle of conservation of the fluid's energy, indicated in equation (4) below.

$$p_t = p_s + \rho\,\frac{v^2}{2} \qquad (4)$$

Therein the total air pressure ($p_t$) could be expressed as the sum of the static pressure ($p_s$) and the dynamic pressure (q). As shown in equation (2) above, the dynamic pressure comprises the fluid density (p) and the fluid velocity (v). Active high lift devices may be able to increase the total pressure.

A thrust coefficient ($C_T$) may be defined by a thrust (*T'*) having a unit of N/m, the fluid dynamic pressure (q) and a reference length ($c_{ref}$).

$$C_T = \frac{T'}{q \cdot c_{ref}} \qquad (5)$$

Description of the figures

In the following, the invention is described with reference to the accompanying figures in more detail. However, the present invention can also be used with any other embodiments not explicitly disclosed hereafter.

While specific feature combinations are described in the following with respect to exemplary embodiments of the present invention, it is to be understood that not all features of the discussed embodiments have to be present for realizing the invention, which is defined by the subject matter of the claims.

The disclosed embodiments may be modified by combining certain features of one embodiment with one or more features of another embodiment. Specifically, the skilled person will understand that features, components and/or functional elements of one embodiment can be combined with technically compatible features, components and/or functional elements of any other embodiment of the present invention given that the resulting combination falls within the definition of the invention provided by the claims. The skilled person also understands that certain features may be omitted in so far as they appear dispensable.

Throughout the present figures and specification, the same reference numerals refer to the same elements. The figures may not be to scale, and the relative size, proportions, and depiction of elements in the figures may be exaggerated for clarity, illustration, and convenience.

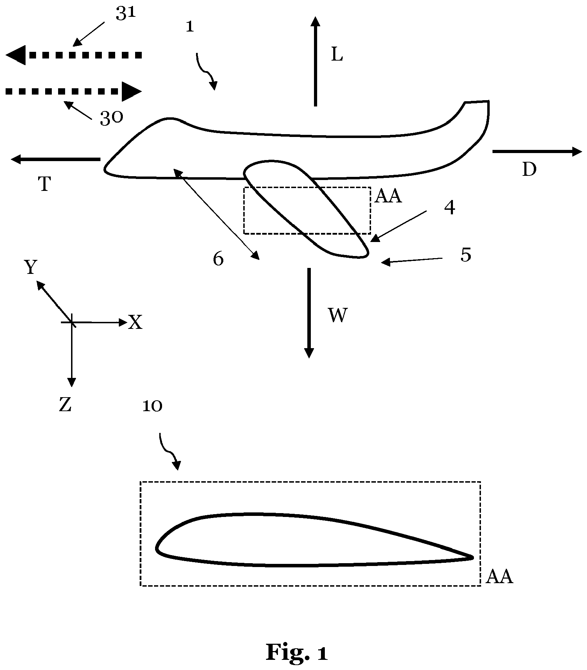

Fig. 1 shows an exemplary fixed-wing air vehicle according to a general embodiment to demonstrate general principles of fixed-wing air vehicles. The vehicle of this example is an aircraft 1. The aircraft 1 comprises a wing 4. In some examples, the wing 4 may also be referred to as the main wing 4. The wing 4 comprises a wing element 4, which typically represents a part of the wing 4 having the largest chord-length. The aircraft 1 also comprises a second wing 4 arranged at another side of the aircraft 1. In between the two wings 4, the fuselage may be located. The aircraft 1 moves, or flies, into a forward direction 31 (direction of airfoil's velocity). The aircraft 1 flies in a fluid, typically the fluid is air. The direction of the air velocity 30 is in the opposite direction, e.g.,

reverse or rearward direction, compared to the forward direction 31. The aircraft 1 can fly at different altitudes.

The aircraft 1 may have a thrust generator to product a thrust T that is typically directed to the forward direction 31. The aircraft 1 flies through the air, or the air flows around the aircraft 1, when viewed from a moving reference system about the aircraft. Either way, the air flow around the aircraft 1 entails a frictional force, which causes a drag or a drag force D. The drag force D acts on surfaces of the aircraft 1, such as the wing's 4 surfaces. The drag force D is the force that opposes movement of the aircraft 1 through the air. The drag force (in the reverse or rearward direction) needs to be met by the thrust (forward direction) of the aircraft 1 to enable a steady-state flight condition. In order to accelerate the aircraft 1, the drag force D is required to be exceeded by the thrust T.

The aircraft 1 is also subject to a weight force W that is directed to a ground. To maintain and/or to keep the aircraft 1 in the air, a lift force L is required, which may be directed in the opposite direction, e.g., the lift force L may be directed to the sky. To fly at greater altitudes, the lift force L should be greater than the weight force W. Most of the lift force L stems from the wings 4 of the aircraft 1.

The wing 4 may have one or more airfoils 10, which may be a 2D cross section of the wing 4 along a spanwise direction 6. In this figure, an airfoil 10 is shown as indicated by way of the dashed rectangle (AA) solely for the purpose of illustration. Said airfoil 10 will be discussed in more detail further below. The airfoil 10 may be at any location along the spanwise direction of the wing. Typically, an airfoil 10 at a mean length of the wing 4 along the spanwise direction 6 is investigated. In the following, it may be referred to such an airfoil 10 at a mean length of the wing 4 along the spanwise direction 6. As the airfoil 10 is comprised by the wing 4, which is comprised by the aircraft 1, the direction of the airfoil's velocity 31 usually corresponds to the direction of the wing's 4 velocity and to the direction of the aircraft's 1 velocity.

The aircraft can have various operating points during a flight's mission, e.g., during a flight from a first location to a second location as further detailed below.

The figure also indicates the x-axis, which may be termed longitudinal axis or roll axis. The x-axis may be an axis through the body, e.g. the fuselage (or fuselage reference line) of the aircraft 1 from nose (e.g. a front) to tail (e.g. a back) in the normal direction of flight. Thereby, the x-axis may go along the direction of the fuselage of the aircraft 1.

The y-axis may be termed traverse axis lateral axis, or pitch axis. The y-axis may be an axis running from a pilot's left to right. Thereby, the y-axis maybe parallel to the wing 4.

The z-axis may be termed normal axis, or yaw axis. The z-axis may be an axis drawn from top to bottom. The x-, y- and z-axes may be perpendicular to each other.

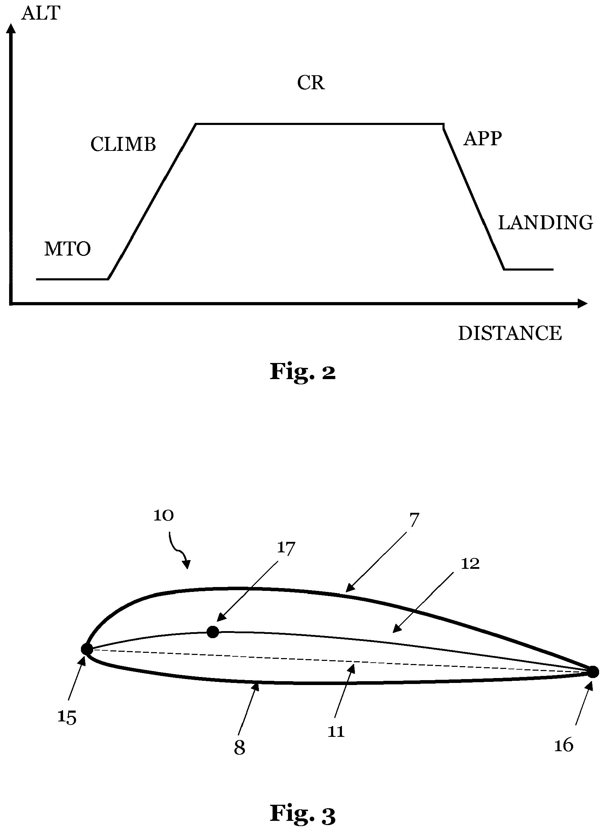

Fig. 2 shows an exemplary aircraft's mission in a schematic diagram with the x-axis being a distance travelled by the aircraft and the y-axis being an altitude of the aircraft. The figure shows different operating points or operating conditions. The aircraft's mission usually starts with the (maximum) TAKE-OFF (MTO) operating point. Subsequently, the climb (CLIMB) operating point follows, which is followed by the cruise operating point (CR). When the aircraft is about to land, the approach (APP) operating point is adjusted followed by the landing (LANDING) operating point. The CR operating point is the aircraft's operating point, which is usually maintained for a prolonged time of the overall aircraft's mission. However, for short range aircrafts such as regional aircrafts and/or air taxis, this may not be the case.

In view of the above, the aircraft's mission may be defined by MTO, CLIMB, CR, APP, LANDING. There may be further operating points not shown in this figure, which are also encompassed and included by an aircraft according to an embodiment of the present invention.

Fig. 3 shows an exemplary wing in a 2D cross section according to a general embodiment to demonstrate general principles of wings in a 2D cross section. The 2D cross section may be termed airfoil 10 as outlined above. The airfoil 10 has a leading edge 15 and a trailing edge 16. Furthermore, the chord (or chord line) 11 is shown. The chord 11 connects the leading edge 15 and the trailing edge 16. The airfoil 10 has an upper side 7 (corresponding to a wing suction side 7) and a lower side 8 (corresponding to a wing pressure side 8). The upper side 7 usually corresponds to a suction side, while the lower side 8 corresponds to a pressure side. The upper side 7 may also be understood as the upper surface, if, e.g., a unit depth is applied to the airfoil 10. Similarly, also the lower side 8 may be understood as the lower surface, if, e.g., a unit depth is applied to the airfoil 10.

The upper 8 and lower 8 surfaces are curved. Accordingly, a camber (or mean camber line) 12 is established. The camber 12 is the line joining the points midway between the upper 7 and lower 8 sides of the airfoil 10. The airfoil 10 has a positive camber 12. This leads to an increased fluid velocity around the upper side 7 compared to the lower side 8.

The figure also shows the point of maximum thickness 17 of the airfoil 10. Usually, the flow accelerates up to a point on the suction side 7 in proximity to the maximum thickness 17 (i.e., the static pressure reduces). Downstream of the airfoil's 10 point of maximum thickness 17, the flow decelerates (i.e., the static pressure increases). Such a deceleration of the flow promotes an adverse pressure gradient. Due to this adverse pressure gradient, the static pressure rises along the direction of the chord and the flow could likely detach or separate. Such an occurrence contributes to the onset of flow separation.

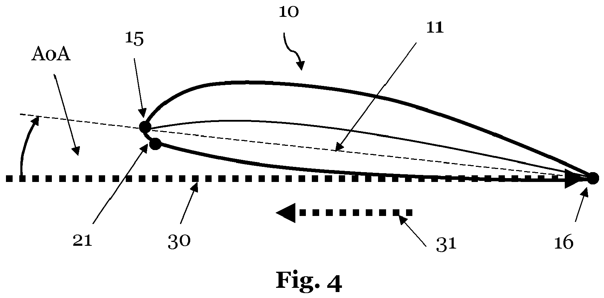

Fig. 4 shows an exemplary wing in a 2D cross section at an angle of attack (AoA) according to a general embodiment to demonstrate general principles of wings in a 2D cross section.

This figure depicts the airfoil 10 of the preceding figure. Additionally, an AoA is indicated. The AoA is positive and may be 10°, 20° or even greater in this example. The direction of the fluid's velocity 30 and the airfoil's velocity 31 are shown. By way of the fluid flowing against the airfoil 10, the flow is separated into a flow above and below the airfoil.

A stagnation point 21 usually occurs, which may be located slightly towards the trailing edge 16 starting from the leading edge 15. At the stagnation point 21, the local velocity of the fluid is zero. The stagnation point 21 is generally located on the lower side 8 of the airfoil due to the high flow circulation.

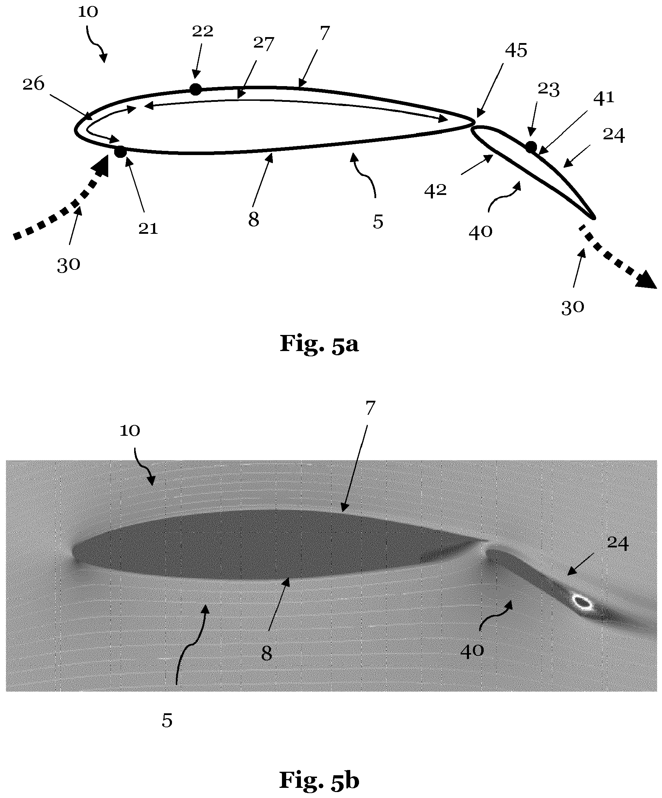

Fig. 5a shows an exemplary conventional wing with a wing element 5 and a flap 40 as used in the prior art in a 2D cross section at an angle of attack.

The direction of the fluid's velocity 30 close to the leading edge is indicated in this figure. The fluid's velocity is directed upwards, which corresponds to an upwash of air. This usually happens at an increased angle of attack. Correspondingly, downstream the flap 40, a downwash of the direction of the fluid's velocity 30 can be recognized. As indicated, the stagnation point 21 is shifted more to the trailing edge of the airfoil 10 (compared to the preceding figure), due to an increased angle of attack.

The figure illustrates a portion in proximity of the leading edge, which is characterized by an acceleration of flow 26 around the upper side 7. Furthermore, the figure illustrates a portion, which is characterized by a deceleration of flow 27 around the upper side 7. As explained above, the shift from an acceleration to a deceleration may be dependent on the point of maximum thickness.

A transition point 22 is indicated at which the flow around the upper side 7 may become turbulent. Thus, also a boundary layer formed in proximity of the upper side 7 may become turbulent. A slot 45 is also formed between the airfoil 10 (and the wing element 5) and the flap 40.

A separation point 23 is indicated on the suction side 41 of the flap 40. At the separation point 23, the flow separates, e.g., detaches, due to an increasingly adverse pressure gradient. Thus, the flow cannot follow the shape of the suction side 41 of the flap 40 anymore in a downstream region. This region is indicated as separated flow 24. Accordingly, the flap 40 may be in a stalled state, which reduces the lift coefficient.

As shown in this exemplary wing element 5 and flap 5 of the prior art, the flow and/or the boundary layer is required to flow a relatively long distance, e.g., starting from the stagnation point 21, first in a reverse direction, around the leading edge and then along the upper side 7 of the wing element 5 and along the suction side 41 of the flap 40. The lift coefficient a wing can provide depends primarily on the amount of flow deceleration the boundary layer on the upper side 7 and the suction side 41 (e.g.,

the low pressure surfaces) can withstand. As shown in this illustrative example, the conventional implementations fail to provide measures to counteract the separation, hence stalling, resulting in a reduced lift coefficient.

Fig. 5b shows streamlines of a flow around an exemplary conventional wing according to the preceding figure.

To ease the understanding, some of the reference signs have been removed. However, this figure may still apply to the exemplary conventional wing of the preceding figure. The figure shows streamlines and illustrate a separated flow 24 at the flap 40 of this conventional wing.

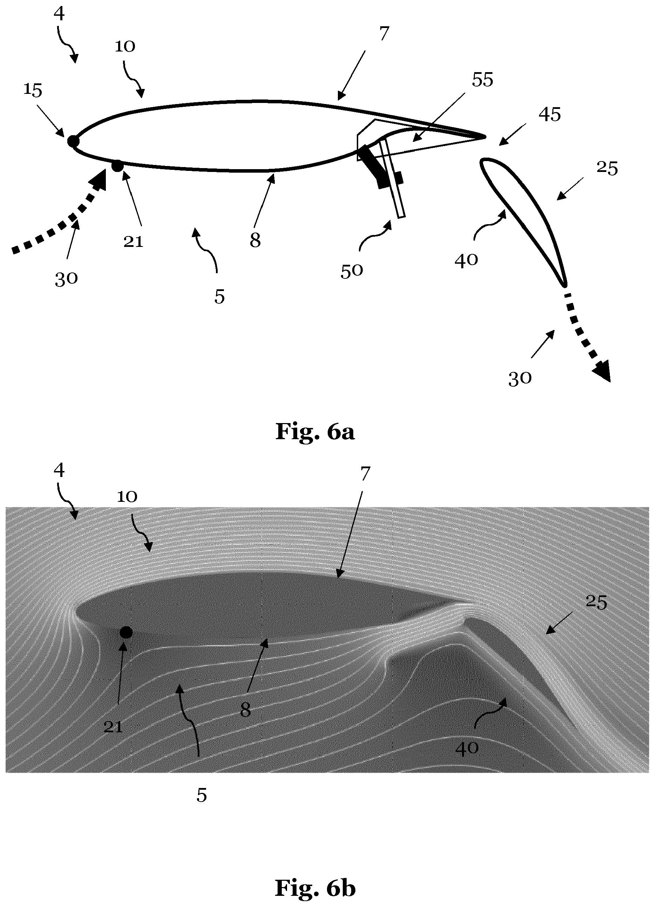

Fig. 6a shows a wing 4 with a wing element 5, a flap 40 and a blower means 50 according to an embodiment of the invention in a 2D cross section at an angle of attack.

The direction of the fluid's velocity 30 close to the leading edge 15 is indicated in this figure. The fluid's velocity is directed upwards, which corresponds to an upwash of air. This usually happens at an increased angle of attack. Correspondingly, downstream the flap 40, a downwash of the direction of the fluid's velocity 30 can be seen. As indicated, the stagnation point 21 is shifted more to the trailing edge of the airfoil 10 (compared to the Fig. 4), due to an increased angle of attack.

The figure also shows that the wing element 5 has a wing pressure side 8 (which corresponds to a lower side 8 of the wing element 5). Furthermore, the blower means 50 is arranged at the wing pressure side 8 upstream of the flap 40. The flap 40 is adapted to divide a main flow into an upper main flow essentially around the flap suction side 41 and a lower main flow essentially around the flap pressure side 42. The blower means 50 is adapted to energize the upper main flow by a greater extent than the lower main flow, when the flap 40 is not in a retracted position.

With this arrangement, the flow around the flap suction side 41 is energized by a greater extent than the flow around the flap pressure side 42 since the flow around the flap suction side 41 is experiencing a greater adverse pressure gradient. Thus, this flow should be energized considerably. Accordingly, the forward speed of the aircraft with such a wing 4 can be reduced without encountering a separation of the flow or risking stalling the flap 40. Thus, high lift at low speeds is achieved, which is advantageous for short take-off and landing (STOL) aircrafts.

The blower means 50 is arranged at the wing pressure side 8, because it is more efficient if energy is imparted into a high pressure flow regime, e.g., a flow of low velocity. This prevails at the wing pressure side 8.

Compared to the conventional designs shown in the preceding figures 5a and 5b, the flap 40 of this embodiment according to the invention may even be more deflected. Thus, the downwash, i.e., the direction of the fluid's velocity 30 downstream a trailing edge of the flap 40 is directed to a downstream direction to a greater extent compared to the preceding figures 5a and 5b. Still, the flow an attached flow 25, which is attributable to the blower means 50 energizing the flow. Thus, the lift coefficient is significantly increased compared to conventional designs.

The figure also shows a recess 55, which is a cove space in this embodiment. The recess 55 is be located at the wing element 5 at a region with which the flap 40 is supported. The flap 40 can be mechanically supported by way of joints. In particular, the recess 55 is arranged in proximity of a downstream region of the wing element 5.

The blower means 50 can be stored away entirely into the recess 55. To make this conveniently feasible, the blower means 50 should be smaller compared to the wing element 5, as indicated in this figure.

The flap 40 in this embodiment can have a simplified structure compared to the conventional flaps. The flap 40 can be a large single slotted flap 40, which is less costly in terms of manufacturing and maintenance and less complex to move and/or deflect. In addition, a large flap 40 has the benefit that the chord-length is larger. Thus, the Reynolds increases, as explained above with respect to equation (3). A higher Reynolds number may lead to a turbulent boundary layer, which is more resistant to flow separation. Accordingly, this further promotes prevention of flow separation, which enhances the lift coefficient.

Fig. 6b shows streamlines of a flow around a wing 4 according to the embodiment of the preceding figure.

In order to facilitate understanding, some of the reference signs have been omitted. However, this embodiment still belongs to the embodiment of the preceding figure. Further and merely for the purpose to highlight the streamlines, the blower means 50 have been omitted in this figure. The figure shows streamlines and illustrate an attached flow 25, which is attributable to the blower means 50 energizing the flow.

It may also be seen in this figure that the streamlines are partially narrowed in a region of the wing pressure side 8, i.e., the lower side 8 of the wing in proximity to the trailing edge of the wing element 5. This may be attributable to an increased velocity of the flow and/or an energizing of the flow, which is further transferred to the flap 40 and in particular to the upper surface of the flap 40.

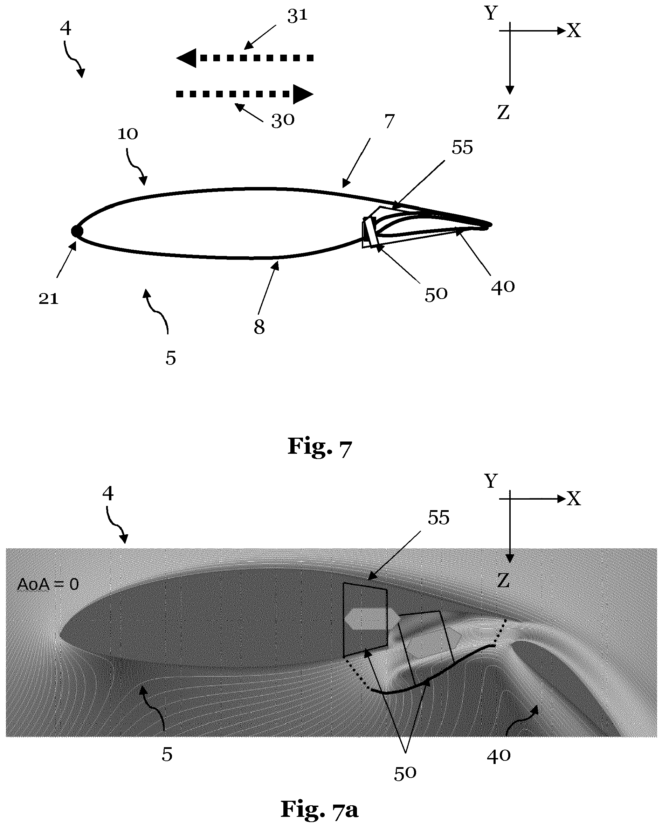

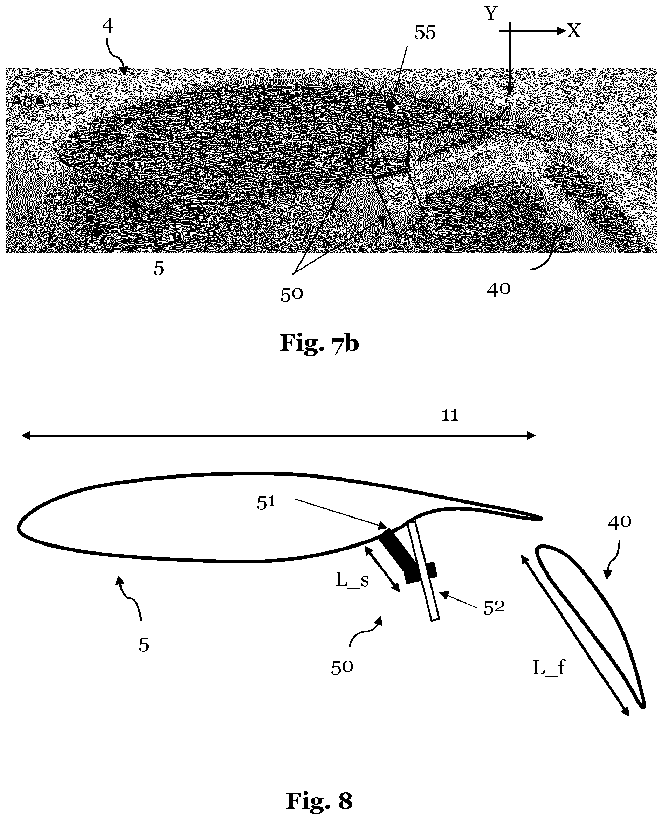

Fig. 7 shows a wing 4 with a wing element 5, a flap 40 and a blower means 50 according to an embodiment of the invention in a 2D cross section at an angle of attack of about o°. This embodiment corresponds to the embodiment of the preceding figures 6a and 6b.

The blower means 50 are depicted in a different mode, i.e., in a not expanded mode, compared to the embodiment of the preceding figures 6a and 6b. In particular, the blower means 50 is stored away entirely in this embodiment.

This has the advantage that the blower means 50 does not substantially influence a fluid flow around the wing element 5 and/or around the flap 40. This is highly appreciated at operating points in which a high lift coefficient is of minor importance, such as a cruise operating point of an aircraft, as shown in Fig. 2 above, indicated as CR. Thus, the wing pressure side 8 can be designed as a large region with laminar flow, which has a low drag force. In particular, such an operating point does not require high or increased lift, which makes the flow of the operating point less likely to separate. Thus, aiming for reduced drag force becomes important. Accordingly, the aerodynamic performance of the wing 4 is significantly increased during cruise operating point. This is even more pronounced, if the aircraft prevails for a prolonged time in the cruise operating point. As indicated in Fig. 2 above, an aircraft may prevail for a long time during its mission in the cruise operating point.

For this, it may also be important to bear in mind that higher Reynolds numbers lead to lower viscous forces, e.g., friction compared to inertia forces. Accordingly, drag is reduced and the aerodynamic performance is increased. As understood by the skilled person, a low minimum drag at high Reynolds numbers is an important aerodynamic characteristic of an aircraft. With this arrangement, the flow can be kept under laminar conditions even when higher Reynolds numbers are reached (which could occur during cruise conditions). Thus, drag is recued. This may be particularly important at cruise operating points as follows:

During cruise, the aircraft travels at greater altitudes compared to TAKE-OFF, CLIMB, APPROACH and/or LANDING, as indicated in Fig. 2. When the altitude is increased, the density of the air decreases. Furthermore, the viscosity of air (being a gas) decreases, which is caused by lower temperatures at higher altitudes. These two effects only slightly change the Reynolds number, as derivable from equation (3) above. Potentially, the Reynolds number could slightly decrease with increasing altitude (if the speed is kept constant). Usually, the speed during cruise is greater compared to other operating points. Thus, the Reynolds number typically increases at higher aircraft's altitudes due to an increased speed. Accordingly, the arrangement allows to design for large surfaces of laminar flow of the wing element 5, which is beneficial at high Reynolds number to reduce drag.

Furthermore, the flap 40 can be stored away as well as indicated in this embodiment. Thus, the flap 40 could be in a retracted position. Different types of flaps 40 could be employed. For instance, a slotted flap, a fowler flap or a double-slotted fowler flap can be employed in this embodiment. In some examples, the flap 40 may also be a plain flap or a split flap Preferably, the flap 40 is a large single slotted flap 40 as explained above.

When comparing the position of the blower means 50 in Fig. 7 with the position in Figs. 6a and 6b, one can understand that the blower means 50 is configured to be moved into the recess 55 substantially not in a downstream direction. In other words, the blower means 50 is moved substantially not in a direction similar to the direction of a fluid's velocity 30.

It is appreciated that the blower means 50 is moved in a direction substantially perpendicular to the downstream direction. The downstream direction may be similar and/or parallel to the direction of the x-axis, indicated in the upper right side of Fig. 7. The x-axis, y-axis and z-axis may be the axes as described herein (e.g. with respect to Fig. 1). The blower means 50 is preferably rotated about the x-axis (the x-axis may be parallel to the chord). In one example, the blower means 50 may also be pivoted and/or rotated about the x-axis.

Such a movement has the advantage, that the blower means 50 may not substantially interfere with a flap 40, which is in a retracted position in the recess 55. This advantageous arrangement is indicated in Fig. 7 as the not expanded mode of the blower means 50 (in which the blower means 50 are in the recess 55) in such a manner that the blower means 50 does not come into contact with the flap 50 being in a retracted position.

It may also be possible that the blower means 50 is moved in the z-axis (as indicated in Fig. 7), e.g. the vertical direction. In such a case the blower means 50 may be substantially translated. Thereby, the blower means 50 may mostly not be rotated and/or pivoted when it is moved into the recess 50 by way of a translation in the z- axis.

It is understood that also a combination of a rotation about the x-axis and/or a translation along the z-axis is possible.

In particular, the downstream direction is the direction from a leading edge 15 to a trailing edge 16. When the blower means 50 is moved, it is also moved at least in part along a vertical direction (e.g. along the z-axis), which is perpendicular to the downstream direction. This can be understood in such a manner that the blower means 50 is rotated and/or pivoted around a rotating point and/or axis.

The blower means 50 can also be moved out of the recess 55 again. This usually happens in a situation, when the aircraft is about to descent, to land or to touch down. In other words, this usually happens if high lift is required. Thus, it also happens before take-off. When the blower means 50 are moved out of the recess 55, this is usually in a reverse direction, e.g., in an upstream direction.

The not expanded mode of the blower means 50 shown in this figure usually means that the blower means 50 is in an inactive mode, an inoperative mode and/or a closed mode. Thus, the blower means 50 usually does not operate and does not increase the energy of a flow.

The expanded mode of the blower means 50 shown in the preceding figures 6a and 6b usually means that the blower means 50 is in an active mode, an operative mode and/or an open mode. Thus, the blower means 50 usually operates and can increase the energy of a flow.

As also derivable from this figure and the preceding figures 6a and 6b, the expanded mode of the blower means 50 is typically synchronized with the flap 40 being not in a retracted position. Such a position is required at operating states of the wing 4, the wing element 5 and/or the flap 40 that demand a high lift.

Fig. 7a shows a further embodiment of the blower means 50 in an expanded and in a not expanded mode. The expanded mode of the blower means 50 is depicted a lower (with respect to the Z-axis) and further downstream (with respect to the X-axis) portion of this figure. The blower means 50 comprises a fan and the fan has a diameter of about 15% of a chord length of the wing element 5. The wing 4 may comprise a plurality of (widely) spaced blower means 50 that are arranged along a spanwise direction of the wing 5. It may be possible to provide flexible and/or foldable inlet diffuser and optional flexible and/or foldable outlet nozzle to beneficially adapt a spanwise distribution of flow passing through the blower means 50. As can be seen, the blower means 50 may be pivoted about the Y-axis from the expanded mode to the not expanded mode in an upstream direction. The blower means 50 is located within the recess 55 when it is in the not expanded mode. The blower means 50 may comprise a ducted fan.

Fig. 7b shows yet a further embodiment of the blower means 50 in an expanded and in a not expanded mode. As in the preceding figure, both modes are shown. The expanded mode is depicted in a lower (with respect to the Z-axis) portion of this figure. The blower means 50 comprises a fan and the fan has a diameter of about 10% of a chord length of the wing element 5. The blower means 50 maybe translated in the Z-axis (in a vertical direction) from the expanded mode to the not expanded mode (e.g. when it is located in the recess). Moving in the vertical direction is the preferred movement of the blower means 50. For mechanical simplicity, pivoting about the X-axis may provide for this translation of the blower means 50 in the Z-axis. The blower means 50 is arranged in a region of the wing element of about 65% of a chord-length of the wing element 5 (e.g. the most downstream part of the blower means 55 in the not expanded mode may be at 65% chord-length). Compared to the embodiment of Fig. 7a, the blower means 50 of this figure is smaller, thus, more blower means 50 could be arranged in a span-wise direction adjacent to one another.

Fig. 8 shows a blower means 50 according to an embodiment of the invention in a 2D cross section. The blower means 50 can be any one of the embodiments of a blower means 50 described in here.

Fig. 8 details that the blower means 50 comprises a support 51 to support the blower means 50 at the wing element 5. Furthermore, the blower means 50 comprises one or more blades 52.

When the blower means 50 is in an active mode, an operative mode and/or an open mode, the blades 52 are configured to rotate at least partially through the recess 55. Thus, the blades 52 may be responsible for increasing a total pressure (e.g. about 1%, 2%, 5%, 10% or even more) of a fluid along a streamline on its way through the blower means 50, see equation (4) above. Thus, as can be seen in the figure, the blades 52 rotate closely to a surface of the wing element 5. Accordingly, there is not much space in between the blades 52 and the wing element 5. However, the blades 52 do touch the surface of the wing element 5 in an expanded mode of the blower means 50. This has the advantage that a compact and space saving design is provided.

Furthermore, the length L_s of the support 51 is indicated in this figure as L_s. The length L_s is at most 80%, preferably at most 70%, more preferably at most 60%, even more preferably at most 50%, further more preferably at most 40%, most preferably at most 30%, 20% or 10% of a chord 11 length of the wing element 5.

In an example of this embodiment, the length L_s of the support 51 divided by the length of the chord 11 of the wing element 5 may be about 5% to 10%.

The support 51 is typically a mechanical element that is rigid in order to properly support the blower means 50. As an example, the support 51 can be a pylon or any other durable and/or robust part that has a mechanical strength sufficient to sustain typical loads occurring during operation of the wing 4, the wing element 5, and/or the aircraft having such a wing 4 and/or wing element 5.

Usually, the blower means 50 is rotated with a hinge or at least part of the hinge being the point of rotation. In this figure, the hinge may be arranged at the pressure side 8 of the wing element 5. The hinge could be part of the support 51. Thus, when the blower means 50 is rotated from an expanded mode into the recess and/or from the recess to an expanded mode, it usually rotates about the hinge.

The figure also shows that the flap 40 has a chord-length L_f of at least 5%, preferably at least 10%, more preferably at least 20%, even more preferably at least 30%, further more preferably at least 40%, most preferably at least 50% of a chord 11 length of the wing element 5.

In an example of this embodiment, the length L_f of the chord of the flap 40 divided by the length of the chord 11 of the wing element 5 may be about 35% to 45%.

Thus, the flow around the flap is characterized by a large Reynolds number as shown in equation (3) above. This is particularly beneficial for small scale aircrafts. A higher Reynolds number leads to a turbulent boundary layer, which can sustain an adverse pressure gradient to a greater extent.

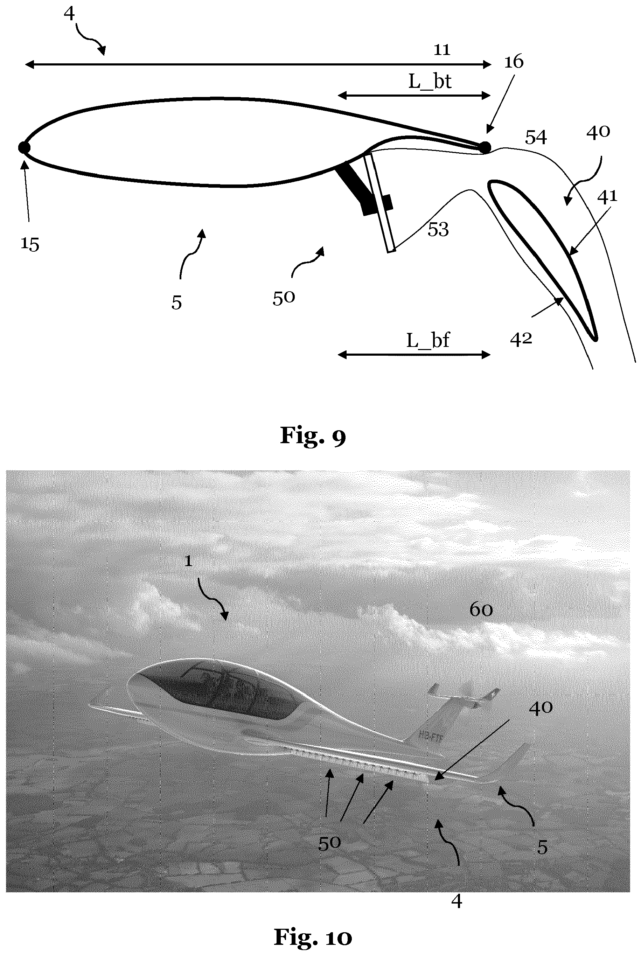

Fig. 9 shows streamlines of a blower means 50 and dimensions of a wing 4 according to an embodiment of the invention in a 2D cross section. A first streamline 53 and a second streamline 54 are shown. As an example, the streamlines could correspond to the outermost streamlines of the flow through the blower means 50.

It can be seen that the streamlines of the flow leaving the blower means 50 are at least partially narrowed compared to, e.g., a diameter of the blades 52 of the blower means 50. Furthermore, more flow is directed around the flap suction side 41 compared to the flap pressure side 42.

As shown in this figure, the blower means is adapted such that at least 50%, preferably at least 60%, more preferably at least 70%, most preferably at least 80% of a flow leaving the blower is directed around the flap suction side 41, i.e., the upper side. Furthermore, at most 100%, preferably at most 96%, more preferably at most 94%, most preferably at most 90% of a flow leaving the blower is directed around the flap suction side 41, i.e., the upper side. The sum of the flow leaving the blower means 50 and being directed around the flap suction side 41 and of the flow leaving the blower means 50 and being directed around the flap pressure side 42 may sum up to 100%. Thus, this sum may equal the flow entering and also the flow leaving the blower means 50.

This has the advantage that the upper main flow of the flap 50 is energized by a greater extent compared to the lower main flow of the flap 50.

In an example of this embodiment, about 80% to 90% of a flow leaving the blower is directed around the flap suction side 41.

The figure also depicts that the blower means 50 is arranged closer to the trailing edge 16 compared to the leading edge 15 of the wing element 5. In particular, the blower means 50 is arranged in a region of the wing element of at least 50%, preferably at least 60%, more preferably at least 70%, even more preferably at least 75%, most preferably at least 80% of a chord 11 length of the wing element 5 as indicated. Furthermore, the blower means 50 is arranged in a region of the wing element 5 of at most 98%, preferably at most 95%, more preferably at most 90%, even more preferably at most 85%, most preferably at most 80% of a chord 11 length of the wing element 5.

In an example of this embodiment, the length L_bt from the blower means 50 to the trailing edge 16 divided by the length of the chord 11 of the wing element 5 may be about 18% to 20%. Thus, the blower means 50 is arranged in a region of the wing element 5 of at least 80% to 72%.

The figure also shows that the blower means 50 is arranged at least 5%, preferably at least 10%, more preferably at least 15%, most preferably at least 20% of a chord 11 length of the wing element 5 upstream of the flap 40. Furthermore, the blower means 50 is arranged at most 40%, preferably at most 35%, more preferably at most 30%, most preferably at most 25% of a chord 11 length of the wing element 5 upstream of the flap 40.

In an example of this embodiment, the length L_bf from the blower means 50 to the flap 40 divided by the length of the chord 11 of the wing element 5 may be about 20% to 22%.

Fig. 10 shows an aircraft 1 according to an embodiment of the invention. The aircraft 1 comprises a wing 5 according to any of the embodiments described herein.

The figure shows an electric general aviation aircraft 1 with performance characteristics, i.e., aerodynamic and fuel efficiency characteristics that can exceed traditional piston engine aircraft performance characteristics. The shown aircraft 1 has a cruise-optimized aspirated design of a wing 5. Such a design is of significant value to the advanced functioning of the aircraft 1 during the aircraft's mission points, such as MTO, CLIMB, CR, APP and LANDING.

Several blower means 50, which are in this example fans 50 are deployed below the wing element 5 of the wing 4. There is also a flap 40 arranged at the wing element 5. The flap 40 is in this example a single slotted flap 40. The flap 40 can also be a fowler flap or a double slotted fowler flap. In some examples, the flap 40 may also be a plain flap or a split flap. It is appreciated that any one of these mentioned flaps can be applied to the embodiment of the wing 4 according to the invention. As an example, for the single slotted flap and the fowler flap, there is a gap between the flap 40 and the wing element 5 through which air can pass.

In this figure, the fans 50 are arranged in such a manner below the wing element 5, e.g., at the wing pressure side upstream of the flap 40, that the suction side of the flap 40 is energized. Thereby, a more effective high-lift wing 4 is provided. The fans 50 can be driven by means of electrical energy and can be moved. The fan 50 are arranged such, that they do not produce much additional thrust, e.g., only at most 20% of thrust compared to the lift product (or even less). Further, the stall speed is significantly reduced due to the flow being prevent from separation even at high adverse pressure gradients. This is particularly useful for STOL applications. Thus, the required runway length can be decreased, which makes the aircraft 1 applicable to a broader range of airports, including airports having relatively small runway lengths.

In one example, when a fowler flap is applied, a relatively high passive lift of the wing 4 may be maintained even in the event of power failure. This is facilitated by an open slot between the flap 40 and the wing element 5.

The figure shows the aircraft 1 in an operating point in which the flap 40 is not in a retracted position. This is usually the case during the MTO, CLIMB, APP and/or LANDING operating point. In such an operating point, the flap 40 can be turned from an angle between about 0° to 30° or more (such as 50°) with respect to a chord-line of the wing element 5. In such a way, an angle of 0° corresponds to the retracted position of the flap 40.

It is to be noted that the aircraft 1 comprises two wings 4, i.e., a left and a right wing 4, which are rigidly attached to a fuselage of the aircraft 1.

In an example, the wing 4 may also comprise a leading edge slat to enable even higher lift coefficients. In addition, the negative pitching moment associated with the increased lift circulation by employing a leading edge slat is limited or avoided by arranging the blower means 50 at the wing pressure side. Slats may be understood as aerodynamic surfaces on the wing 4 leading edge of the aircraft 1 which, when deployed, allow the wing 4 to operate at a higher angle of attack.

The aircraft 1 may comprise the following specifications:

| Parameter | Unit | Value |
|---|---|---|
| PAX | - | at least 3 + pilot |
| Design Range | nm | 500 + reserves |
| Max. Payload | kg | 360 |
| Balanced field length | m | 300 to 400 |
| MTO-thrust | N | 9000 |
| CR-thrust | N | 700 |
| Mach number | - | < 0.6 |
| Mean chord length of wing | cm | 83 |
| Blower means diameter | cm | 8.3 |

It may be appreciated that the design altitude and/or the service ceiling is not affected by any engine oxygen starvation. It is to be noted that the MTO-thrust may be subject to a limitation provided by the battery. It may also be viable to scale down the thrust for different design missions. A nautical mile (nm) could be 1852 meters.

A balanced field length may be the shortest field length at which a balanced field takeoff may be performed. Factors that may affect the balanced field length comprise a mass of the aircraft, a thrust, an aircraft configuration and a runway condition. A balanced field takeoff is a condition where an accelerate-stop distance required may be substantially equal to a takeoff distance required.

As an example, if an overall cruise thrust of about 500 to 1,000 N is provided, and a lift to drag ratio of about 10 to 20 prevails, an overall lift force could be about 5,000 N to 20,000 N.

The Reynolds number, e.g. the Reynolds number at cruise conditions may depend on the altitude and the speed (e.g. the Mach number) of the aircraft.

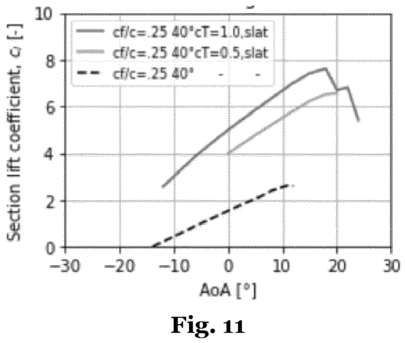

Fig. 11 shows a diagram of the lift coefficient (Cl) of a 2D cross section of a wing according to an embodiment of the invention. The x-axis of the diagram is the angle of attack (AoA), e.g. the angle between the air speed vector and a chord line of the wing.

The two solid lines represent configurations with blower means according to an embodiment of the invention. The dashed line represents a configuration without energizing the flow around the flap, e.g. no blower means is applied, but at the same flap deflection (40°). The diagram shows that an increased lift coefficient can be achieved if the blower means according to an embodiment of the invention is applied.

The configuration denoted as denoted as "cf/c=0.25, 40°, cT=1.0, (with) slat" (i.e. having a flap chord cf to wing element chord c ratio of 0.25 (e.g. 25%), a flap deflection of 40° and a thrust coefficient of 1.0), shows a lift coefficient of about 7 or even higher at an angle of attack of about between 10° to 20°. The slight decline (it may also be referred to as wiggles) at increased AoA may be attributable to an indication of a stall. The values of the lift coefficient for higher AoA values than the values where an onset of the wiggles is shown may, in one example, be attributable to limitations of the prediction model.

The configuration denoted as denoted as "cf/c=0.25, 40°, cT=0.5, (with) slat" (i.e. having a flap chord cf to wing element chord c ratio of 0.25 (e.g. 25%), a flap deflection of 40° and a thrust coefficient of 0.5), shows a lift coefficient of about 6 or 6.5 or higher at an angle of attack of about 15° to 20°.

The coefficients are predicted by way of 2D analyses. As an example, 2D viscous RANS simulations were performed. Higher thrust coefficients (cT) or ($C_T$) allow for larger flap chord ratios (cf divided by c). It is to be noted that the Reynolds number of these results may be in the range of the order of a million or even higher.

Depending on a geometry and/or modelling setting of the blower means and/or remaining components of the wing, even higher lift coefficients maybe reached (e.g. about more than 8 or about more than 9).

The scope of protection is determined by the claims and is not limited by the embodiments disclosed in the above figures.

It will be apparent to those skilled in the art that numerous modifications and variations of the described examples and embodiments are possible in light of the above teaching. The disclosed examples and embodiments are presented for purposes of illustration only. Other alternate embodiments may include some or all of the features disclosed herein. Therefore, it is the intent to cover all such modifications and alternate embodiments as may come within the true scope of this invention.

**List of reference signs**

| | |
|---|---|
| D | drag force of aircraft |
| L | lift force of aircraft |
| W | weight force of aircraft |
| T | thrust force of aircraft |
| T' | thrust per unit length |
| X | x-axis |
| Y | y-axis |
| Z | z-axis |

| | |
|---|---|
| MTO | maximum take-off operating point |
| CLIMB | climb operating point |
| CR | cruise operating point |
| APP | approach operating point |

LANDING     landing operating point

ALT     altitude
TOFL     take-Off field length
PAX     passengers approximately

L_s     length of support
L_f     length of flap
L_bt     length from blower to trailing edge
L_bf     length from blower to flap

AoA     angle of attack
RANS     Reynolds Averaged Navier-Stokes

$C_L$     lift coefficient
$\rho$     fluid density
$\nu$     velocity
$A$     reference area
$q$     dynamic pressure
Re     Reynolds number
$\mu$     dynamic viscosity
$L$     characteristic length
$p_t$     total pressure
$p_s$     static pressure
$C_T$     thrust coefficient
$c_{ref}$     reference length
cf     chord length of flap (Fig. 11)
c     chord length of wing element (Fig. 11)

1     aircraft

4     wing
5     wing element
6     spanwise direction of a wing
7     upper side/wing suction side
8     lower side/wing pressure side

10     airfoil
11     chord (chord line)
12     camber (mean camber line)
15     leading edge
16     trailing edge
17     maximum thickness

21     stagnation point
22     transition point
23     separation point
24     separated flow
25     attached flow
26     acceleration of flow
27     deceleration of low

30     direction of fluid's velocity
31     direction of airfoil's velocity

40     flap
41     flap suction side
42     flap pressure side

45     slot
50     blower means (propulsion unit)
51     support of the blower means
52     blades of the blower means
53     first streamline
54     second streamline
55     recess of the main wing

**Claims**

1. A wing (4) for an aircraft (1), the wing (4) comprising:

   a wing element (5) having a wing pressure side (8);
   a flap (40) arranged at the wing element (5), the flap (40) having a flap suction side (41) and a flap pressure side (42), wherein the flap (40) is adapted to divide a main flow into an upper main flow essentially around the flap suction side (41) and a lower main flow essentially around the flap pressure side (42); and
   a blower means (50) arranged at the wing pressure side (8) upstream of the flap (40) and adapted to energize the upper main flow by a greater extent than the lower main flow, when the flap (40) is not in a retracted position.

2. The wing (4) according to the preceding claim, wherein the wing (4) further comprises a recess (55), and wherein the blower means (50) is movably arranged on the wing pressure side (8) via a hinge to be moved into the recess (55).

3. The wing (4) according to the preceding claim, wherein the recess (55) is arranged at the wing element (5) substantially at a region with which the flap (40) is engaged; and
   wherein the blower means (50) is configured to be moved into the recess (55) substantially not in a downstream direction.

4. The wing (4) according to any one of the claims 2 or 3, wherein the recess (55) is arranged in proximity of a downstream region of the wing element (5).

5. The wing (4) according to any one of the preceding claims, wherein the blower means (50) is adapted to be in an expanded mode, when the flap (40) is not in a retracted position, such as an APPROACH, LANDING, TAKE-OFF and/or CLIMB operating state; and
   wherein the blower means (50) is adapted to be not in an expanded mode, when the flap (40) is in a retracted position, such as a CRUISE operating state.

6. The wing (4) according to any one of the preceding claims, wherein the blower means (50) is movable relative to the wing element (5) to change a direction of the flow leaving the blower means (50).

7. The wing (4) according to any one of the preceding claims, wherein the wing element (5) comprises a leading edge and a trailing edge, wherein the blower means (50) is arranged closer to the trailing edge compared to the leading edge of the wing element (5), preferably

   wherein the blower means (50) is arranged in a region of the wing element (5) of at least 50%, preferably at least 60%, more preferably at least 70%, even more preferably at least 75%, most preferably at least 80% of a chord-length of the wing element (5); and/or
   wherein the blower means (50) is arranged in a region of the wing element (5) of at most 98%, preferably at most 95%, more preferably at most 90%, even more preferably at most 85%, most preferably at most 80% of a chord-length of the wing element (5).

8. The wing (4) according to any one of the preceding claims, wherein the blower means (50) is arranged at least 5%, preferably at least 10%, more preferably at least 15%, most preferably at least 20% of a chord-length of the wing element (5) upstream of the flap (40); and/or
   wherein the blower means (50) is arranged at most 40%, preferably at most 35%, more preferably at most 30%, most preferably at most 25% of a chord-length of the wing element (5) upstream of the flap (40).

9. The wing (4) according to any one of claims 2 to 4, wherein the blower means (50) comprises a support (51) to support the blower means (50) at the wing element (5) and one or more blades (52), wherein the blades (52) are configured to rotate at least partially through the recess (55); and

   wherein a length of the support (51) is at most 80%, preferably at most 70%, more preferably at most 60%, even more preferably at most 50%, further more preferably at most 40%, further more preferably at most 30%, further more preferably at most 20%, most preferably at most 10% of a chord-length of the wing element (5); and/or
   wherein a length of the support (51) is at least 1%, preferably at least 2%, more preferably at least 3%, even more preferably at least 4%, most preferably at least 5% of a chord-length of the wing element (5).

10. The wing (4) according to any one of the preceding claims, wherein the blower means (50) is adapted to energize the upper main flow and/or the lower main flow such that the upper main flow and/or the lower main flow is attached over at least 60%, preferably at least 70%, more preferably at least 80%, even more preferably at least 90%, most preferably at least 100% of a surface and/or a chord-length of the flap (40), optionally

   at an angle of attack of the wing (4) of at least 0°, preferably at least 5°, more preferably at least 10°, even more preferably at least 15°, further more preferably at least 20°, even further more preferably at least 25°, most preferably at least 30°; and/or
   at a lift coefficient of the wing (4) of at least 2, preferably at least 3, more preferably at least 4, even more preferably at least 5, further more preferably at least 6, most preferably at least 7.

11. The wing (4) according to the any one of the preceding claims, wherein the blower means (50) is adapted such that at least 50%, preferably at least 60%, more preferably at least 70%, most preferably at least 80% of a flow leaving the blower is directed around the flap suction side (41); and/or
   at most 100%, preferably at most 96%, more preferably at most 94%, most preferably at most 90% of a flow leaving the blower is directed around the flap suction side (41).

12. The wing (4) according to any one of the preceding claims, wherein the blower means (50) is adapted such that a thrust generated by the blower means (50) is at most 50%, preferably at most 30%, more preferably at most 10%, most preferably at most 0% compared to a lift generated by the blower means (50).

13. The wing (4) according to any one of the preceding claims, wherein the blower means (50) is adapted to energize the upper main flow and/or the lower main flow to increase a momentum of a boundary layer suction side around the flap suction side (41) and/or of a boundary layer pressure side around the flap pressure side (42),

   wherein increasing the momentum of the boundary layer suction side and/or of the boundary layer pressure side means that a total pressure of a fluid is increased by at least 1%, preferably at least 2%, more preferably at least 5%, most preferably at least 10%;
   optionally wherein increasing the momentum of the boundary layer suction side and/or of the boundary layer pressure side means that a velocity of a fluid is increased by a factor of at least 1.5, preferably at least 2.0, more preferably at least 3.0, most preferably at least 5.0.

**14.** An aircraft (1) comprising at least one wing (4) according to any one of the preceding claims.

**15.** A method for operating an aircraft (1) having a wing (4), the wing (4) comprising a wing element (5), a flap (40) and a blower means (50), the method comprising:

generating, by moving the aircraft (1), a main flow around the wing (4);
moving the flap (40) in a not retracted position;
dividing, by moving the aircraft (1), the main flow in an upper main flow essentially around a flap suction side (41) and a lower main flow essentially around a flap pressure side (42);
energizing, using the blower means (50), the upper main flow by a greater extent than the lower main flow.

**Fig. 1**

ALT

CR

CLIMB

APP

MTO

LANDING

DISTANCE

**Fig. 2**

10

7

17

12

15

8

11

16

**Fig. 3**

**Fig. 4**

**Fig. 5a**

**Fig. 5b**

**Fig. 6a**

**Fig. 6b**

**Fig. 7**

AoA = 0

**Fig. 7a**

**Fig. 7b**

**Fig. 8**

**Fig. 9**

**Fig. 10**

**Fig. 11**

Europäisches
Patentamt

European
Patent Office

Office européen
des brevets

# EUROPEAN SEARCH REPORT

Application Number

EP 22 18 9442

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/076425 A2 (AIRBUS OPERATIONS GMBH [DE]; GOELLING BURKHARD [DE]) 30 June 2011 (2011-06-30) * figures 1-3; examples 1,8-10,15-16 * | 1-15 | INV. B64C21/04 B64C9/16 |
| X | DE 10 2009 011662 A1 (AIRBUS GMBH [DE]) 9 September 2010 (2010-09-09) * paragraph [0047]; figures 2-5,8-9 * | 1-15 | |
| X | US 2007/034746 A1 (SHMILOVICH ARVIN [US] ET AL) 15 February 2007 (2007-02-15) * paragraph [0038]; figures 1-2 * | 1-15 | |
| X | US 2022/194562 A1 (SHMILOVICH ARVIN [US] ET AL) 23 June 2022 (2022-06-23) * paragraphs [0026] - [0029]; figures 4-6 * | 1-15 | |
| X | EP 3 081 482 A1 (BOEING CO [US]) 19 October 2016 (2016-10-19) * paragraph [0020]; figures 5-7 * | 1-15 | TECHNICAL FIELDS SEARCHED (IPC) B64C |

The present search report has been drawn up for all claims

| Place of search | Date of completion of the search | Examiner |
|---|---|---|
| Munich | 20 January 2023 | Nicol, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 9442

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | | Publication date | Patent family member(s) | | Publication date |
|---|---|---|---|---|---|
| WO 2011076425 | A2 | 30-06-2011 | CA | 2784859 A1 | 30-06-2011 |
| | | | CN | 102781776 A | 14-11-2012 |
| | | | DE | 102009060326 A1 | 30-06-2011 |
| | | | EP | 2516260 A2 | 31-10-2012 |
| | | | US | 2013009015 A1 | 10-01-2013 |
| | | | WO | 2011076425 A2 | 30-06-2011 |
| DE 102009011662 | A1 | 09-09-2010 | BR | PI1010248 A2 | 22-03-2016 |
| | | | CA | 2754339 A1 | 10-09-2010 |
| | | | CN | 102341305 A | 01-02-2012 |
| | | | DE | 102009011662 A1 | 09-09-2010 |
| | | | EP | 2403758 A1 | 11-01-2012 |
| | | | RU | 2011140059 A | 10-04-2013 |
| | | | US | 2012001028 A1 | 05-01-2012 |
| | | | WO | 2010099967 A1 | 10-09-2010 |
| US 2007034746 | A1 | 15-02-2007 | AT | 491636 T | 15-01-2011 |
| | | | CN | 101263051 A | 10-09-2008 |
| | | | EP | 1919772 A2 | 14-05-2008 |
| | | | ES | 2357219 T3 | 20-04-2011 |
| | | | JP | 5344917 B2 | 20-11-2013 |
| | | | JP | 2009504481 A | 05-02-2009 |
| | | | US | 2007034746 A1 | 15-02-2007 |
| | | | WO | 2007021480 A2 | 22-02-2007 |
| US 2022194562 | A1 | 23-06-2022 | NONE | | |
| EP 3081482 | A1 | 19-10-2016 | CN | 106043669 A | 26-10-2016 |
| | | | EP | 3081482 A1 | 19-10-2016 |
| | | | US | 2016375987 A1 | 29-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. RADESPIEL ; M. BURNAZZI ; M. CASPER ; P. SCHOLZ.** Active flow control for high lift with steady blowing. *Aeronautical Journal,* January 2016